(19) **Europäisches Patentamt / European Patent Office / Office européen des brevets**

(11) **EP 1 650 910 B1**

(12) **FASCICULE DE BREVET EUROPEEN**

(45) Date de publication et mention de la délivrance du brevet:
**24.12.2008 Bulletin 2008/52**

(51) Int Cl.:
*H04L 12/56* (2006.01)

(21) Numéro de dépôt: **05108991.0**

(22) Date de dépôt: **29.09.2005**

(54) **Contrôle des paramètres d'une connexion Ethernet-GMPLS**

Steuerung von Parametern eines GMPLS-Ethernet-Anschlusses

Controlling parameters of a GMPLS-Ethernet connection

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **22.10.2004 FR 0411315**

(43) Date de publication de la demande:
**26.04.2006 Bulletin 2006/17**

(73) Titulaire: **Alcatel Lucent**
**75008 Paris (FR)**

(72) Inventeurs:
• **VIGOUREUX, Martin**
  **75015, PARIS (FR)**
• **DOTARO, Emmanuel**
  **91370, VERRIERES LE BUISSON (FR)**
• **PAPADIMITRIOU, Dimitri**
  **B - 1190, BRUSSELS (BE)**

(74) Mandataire: **Korakis-Ménager, Sophie et al**
**Alcatel Lucent**
**Intellectual Property & Standards**
**54 rue La Boétie**
**75008 Paris (FR)**

(56) Documents cités:
**EP-A- 1 037 500          WO-A-00/65783**

• **SHARMA V ET AL: "ESTIMATING TRAFFIC PARAMETERS IN INTERNET VIA ACTIVE MEASUREMENTS FOR QOS AND CONGESTION CONTROL" GLOBECOM'01. 2001 IEEE GLOBAL TELECOMMUNICATIONS CONFERENCE. SAN ANTONIO, TX, NOV. 25 - 29, 2001, IEEE GLOBAL TELECOMMUNICATIONS CONFERENCE, NEW YORK, NY : IEEE, US, vol. VOL. 4 OF 6, 25 novembre 2001 (2001-11-25), pages 2527-2531, XP001060598 ISBN: 0-7803-7206-9**

**Description**

L'invention concerne les réseaux de communication, et plus particulièrement le contrôle de paramètres de connexions à établir au sein de tels réseaux.

On entend ici par « connexion » un lien de communication défini par un chemin de connexion passant par une suite ordonnée d'éléments de réseau définissant des nœuds, comme par exemple des commutateurs ou des routeurs.

Comme le sait l'homme de l'art, une connexion est généralement définie, en complément de son chemin de connexion, par des paramètres dont les valeurs doivent être comprises à l'intérieur d'intervalles prédéfinis en fonction d'un accord (ou SLA pour « Service Level Agreement ») passé entre son ou ses utilisateurs et l'opérateur du réseau.

Tant que les paramètres d'une connexion demeurent à l'intérieur de leurs intervalles respectifs, l'accord peut-être respecté.

WO00/65783 décrit des commutateurs ATM ou IP qui traitent des requêtes d'établissement de connexion. Un modèle opérationnel est utilisé pour analyser la consommation d'un commutateur en termes de pertes de paquets et de délai. Un commutateur transmet au commutateur suivant sur la connexion un information sur le budget restant à consommer en termes de pertes de paquets et de délai.

EP1037500 décrit un élément de réseau ATM conforme au préambule de la revendication 1. Il détermine un budget de délai de transmission égal à la différence entre une consigne de délai de bout en bout et un délai accumulé dans un message de demande de connexion, divisée par le nombre d'éléments de réseau situés à son aval sur le chemin de connexion. Si ses ressources sont insuffisantes pour traiter les cellules en respectant ce budget de délai de transmission, il retourne un message à l'émetteur du message de demande de connexion pour que le chemin de connexion soit modifié vers un autre élément de réseau.

Cependant, dans certaines situations un utilisateur peut souhaiter que l'un au moins des paramètres de la connexion qu'il souhaite utiliser ne dépasse pas une valeur maximale égale à la borne supérieure de son intervalle prédéfini. Une telle possibilité est offerte dans certains réseaux de communication, tels que ceux du type dit « à commutation d'étiquettes » (ou « label switched network »), par exemple de type MPLS (« MultiProtocol Label Switching ») ou GMPLS (« Generalized MPLS »).

Plus précisément, dans les réseaux du type précité et dans un contexte de type L2 LSP (« Layer-2 Label Switched Path » - chemin de commutation d'étiquettes de couche 2), il a été proposé d'intégrer chaque valeur maximale dans un attribut, appelé « SENDER_TSPEC », du message d'établissement de connexion qui est transmis d'un nœud à l'autre d'un chemin de connexion. Ce type d'intégration est notamment décrit dans le document de P. Papadimitriou et al, « Generalized MPLS (GMPLS) RSVP-TE Signalling in support of Layer-2 Label Switched Paths (L2 LSP) », accessible sur Internet à l'adresse http://www.ietf.org/internet-drafts/draft-papadimitriou-ccamp-gmpls-l2sc-lsp-02.txt.

Chaque élément de réseau définissant un nœud du chemin de connexion est agencé de manière à vérifier s'il peut individuellement satisfaire aux valeurs maximales qui sont contenues dans chaque message d'établissement de connexion. Mais, dans le cas d'un paramètre additif, comme par exemple le délai de transmission (ou « delay ») ou la gigue (ou « jitter »), cette vérification locale ne permet pas d'assurer que le paramètre est satisfait d'un bout à l'autre de la connexion. En effet, chaque nœud d'un chemin de connexion peut satisfaire individuellement et localement à une valeur maximale, mais l'accumulation des valeurs locales d'un paramètre additif, introduites par les différents nœuds d'un chemin de connexion, peut au final excéder cette valeur maximale.

Par conséquent l'intégration présentée ci-avant permet certes de transmettre des valeurs maximales aux nœuds d'un chemin de connexion, mais la façon dont les valeurs maximales sont utilisées et la restriction de lecture seule imposée sur les objets de l'attribut SENDER_TSPEC ne permettent pas de garantir que la connexion offre effectivement les valeurs de paramètre (s) maximales une fois établie.

L'invention a donc pour but de remédier à tout ou partie des inconvénients précités dans les réseaux Ethernet à plan de contrôle GMPLS.

Elle propose à cet effet un dispositif de contrôle, pour un nœud d'un réseau de communication Ethernet à plan de contrôle GMPLS, par lequel doit passer une connexion à établir, comprenant des moyens de contrôle chargés, lorsque leur nœud reçoit un message d'établissement de connexion, contenant au moins une première valeur représentative de la somme depuis le début de la connexion à établir de la valeur locale d'un paramètre additif, introduite par chaque nœud précédent (du chemin de connexion), de déterminer une seconde valeur fonction de cette première valeur et de la valeur locale introduite par leur nœud, puis de comparer cette seconde valeur à un seuil choisi, de manière à déterminer si la connexion supporte au niveau de leur nœud une valeur maximale du paramètre additif, et de substituer dans le message reçu la première valeur par la seconde valeur déterminée, au moins lorsque la connexion supporte la valeur maximale, selon la revendication 1.

Le dispositif selon l'invention peut comporter d'autres caractéristiques qui peuvent être prises séparément ou en combinaison, et notamment :

- lorsque la connexion ne supporte pas la valeur maximale, ses moyens de contrôle peuvent être chargés de générer un message d'erreur signalant que la connexion à établir ne peut pas présenter la valeur maximale du paramètre additif,

- le message d'établissement peut comprendre une troisième valeur égale au seuil choisi, et la première valeur peut être égale à la somme depuis le début de la connexion à établir de la valeur locale du paramètre additif, introduite en chaque noeud précédent,

> ➤ ses moyens de contrôle peuvent alors être chargés de soustraire la seconde valeur de la troisième valeur, et de procéder à la substitution lorsque le résultat de la soustraction est supérieur ou égal à zéro,

> ➤ ses moyens de contrôle peuvent être chargés de soustraire la seconde valeur de la troisième valeur et de procéder à la génération d'un message d'erreur lorsque le résultat de la soustraction est inférieur à zéro,

- en variante, le seuil peut être égal à zéro et la première valeur peut être égale au résultat d'une soustraction entre une troisième valeur, égale à la valeur maximale, et la somme depuis le début de la connexion à établir de la valeur locale du paramètre additif, introduite en chaque noeud précédent. Dans ce cas, les moyens de contrôle sont agencés pour déterminer la seconde valeur en soustrayant la valeur locale, introduite par leur noeud, de la première valeur reçue, et pour procéder à la substitution lorsque le résultat de la comparaison est supérieur au seuil,

- ses moyens de contrôle peuvent être chargés de procéder à la génération d'un message d'erreur lorsque le résultat de la soustraction est inférieur au seuil,

- lorsque le réseau est à commutation d'étiquettes et que la connexion doit être établie dans un contexte de type L2 LSP, la première valeur et la troisième valeur peuvent être des valeurs d'attributs dédiés de chemin de commutation d'étiquettes du message d'établissement. Dans une première variante, la première valeur et la troisième valeur peuvent être des valeurs, conformes à un format dédié de type TLV, de l'attribut SENDER_TSPEC du message d'établissement. La première valeur est alors accompagnée d'un indicateur d'exception autorisant sa substitution locale. Dans une seconde variante, la première valeur et la troisième valeur peuvent être des valeurs d'objets dédiés d'un champ de qualité de service (ou QoS) du message d'établissement,

- ses moyens de contrôle peuvent être chargés de générer des messages d'erreur de type « PathError »,

- certains au moins des messages d'établissement peuvent comporter au moins deux premières valeurs représentatives respectivement de la somme depuis le début de la connexion à établir de la valeur locale de deux paramètres additifs, introduite en chaque noeud précédent. Dans ce cas, les moyens de contrôle sont agencés pour déterminer une seconde valeur pour chaque première valeur en fonction de cette première valeur et de la valeur locale correspondante introduite par le noeud, puis pour comparer chaque seconde valeur à un seuil correspondant choisi de manière à déterminer si la connexion supporte au niveau de leur noeud des valeurs maximales des paramètres additifs, et pour substituer dans le message reçu chaque première valeur par chaque seconde valeur déterminée, au moins lorsque la connexion supporte chaque valeur maximale,

- chaque paramètre additif peut être choisi parmi au moins le délai de transmission et la gigue.

L'invention propose également un noeud de type élément de réseau de niveau 2 à commutation d'étiquettes, pour un réseau de communication Ethernet à plan de contrôle GMPLS et à commutation d'étiquettes, équipé d'un dispositif de contrôle du type de celui présenté ci-avant.

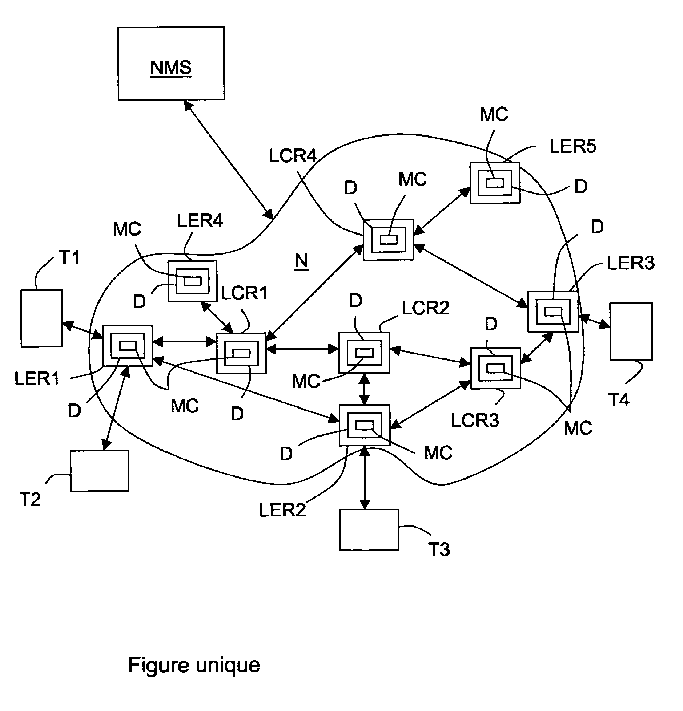

D'autres caractéristiques et avantages de l'invention apparaîtront à l'examen de la description détaillée ci-après, et du dessin annexé, sur lequel l'unique figure illustre de façon très schématique un exemple de réseau de communication à commutation d'étiquettes comportant une multiplicité de noeuds périphériques (LERs) et de coeur (LCRs), couplés entre eux et équipés chacun d'un dispositif de contrôle selon l'invention. Le dessin annexé pourra non seulement servir à compléter l'invention, mais aussi contribuer à sa définition, le cas échéant.

L'invention a pour objet de permettre de vérifier qu'au moins un paramètre, d'une connexion à établir au sein d'un réseau de communication, peut présenter une valeur dite maximale, inférieure ou égale à la borne supérieure d'un intervalle de valeurs prédéfini.

Dans ce qui suit, on considère que le réseau de communication est du type dit « à commutation d'étiquettes » (ou « Label Switched Network »), et plus précisément qu'il s'agit d'un réseau de couche 2 de type Ethernet auquel est appliqué un plan de control de type GMPLS (« Generalized MultiProtocol Label Switching »). Ce type de réseau est notamment défini par les normes RFC 3471, RFC 3473 et RFC 3477 de l'IETF. Encore plus précisément, on considère dans ce qui suit que le réseau Ethernet à plan de contrôle GMPLS permet l'établissement de connexions dans un contexte de type L2 LSP (« Layer-2 Label Switched Path » - chemin de commutation d'étiquettes de couche 2).

Comme cela est schématiquement illustré sur l'unique figure, un réseau Ethernet à plan de contrôle GMPLS (ci-après appelé « réseau GMPLS ») comporte généralement, une multiplicité d'éléments de réseau définissant des noeuds, tels que des commutateurs ou routeurs à commutation d'étiquettes (ou LSRs pour « Label Switched Routers »), couplés entre eux.

Ces noeuds LSR peuvent être regroupés en deux catégories : les noeuds périphériques LERn (comme par exemple des « Label Edge Routers »), et les noeuds de coeur LCRm (comme par exemple des « Label Core Routers »). Les noeuds LERn sont chargés d'établir des chemins de connexion (également appelés chemins de commutation d'étiquettes (ou LSP)) au sein du réseau, tandis que les noeuds LCRm sont chargés de la commutation.

Dans l'exemple illustré le réseau comporte cinq (n=5) noeuds périphériques LERn, mais l'indice n peut prendre n'importe quelle valeur supérieure ou égale à 2, et quatre (m=4) noeuds de coeur LCRm, mais l'indice m peut prendre n'importe quelle valeur supérieure ou égale à 1.

Par ailleurs, dans ce qui suit on entend par « lien » une connexion entre deux noeuds LSR. Il est important de noter que deux noeuds voisins peuvent être liés par un lien physique de transmission, tandis qu'une connexion relie deux noeuds qui ne sont pas nécessairement voisins.

On entend ici par « chemin de connexion » un trajet entre un noeud périphérique LER source et un noeud périphérique LER de destination, défini par une séquence de liens établis entre deux noeuds LSR, ou, ce qui revient au même, défini par une suite ordonnée de noeuds. Les chemins de connexion sont généralement calculés de manière à optimiser la transmission de trafic (ou flux) entre un noeud périphérique LER source (par exemple LER1) et un noeud périphérique de destination (par exemple LER3). Dans un réseau GMPLS, chaque noeud périphérique LER est agencé, lorsqu'il constitue une source, de manière à calculer le meilleur chemin de connexion pour transférer les flux de données qu'il reçoit vers le noeud périphérique LER de destination, compte tenu du service associé aux flux, de la topologie en cours du réseau et des charges en cours des liens.

Par ailleurs, des terminaux d'utilisateurs ou d'entreprises Ti (ici i = 1 à 4), appartenant à des clients du réseau, sont susceptibles de se raccorder à certains au moins des noeuds LERs afin de pouvoir échanger des données entre eux au moyen de connexions L2 LSP éventuellement prédéfinies.

En outre, le réseau GMPLS comporte un système de gestion de réseau ou NMS (« Network Management System ») chargé de transmettre des données aux noeuds LSR et d'extraire des données de ces derniers afin de permettre la gestion du réseau par son administrateur (ou gestionnaire).

L'invention intervient dans la phase d'établissement des connexions. Plus précisément, elle intervient pendant la phase de transmission d'un message d'établissement de connexion entre des noeuds LSR (LERn et LCRm) d'un chemin de connexion.

L'invention propose à cet effet d'implanter, de préférence dans chaque noeud LSR du réseau, qu'il soit périphérique LERn ou de coeur LCRm, un dispositif de contrôle D chargé de vérifier si une connexion à établir, définie par un chemin de connexion passant par le noeud dans lequel il est implanté, n'excède pas (supporte) au niveau de ce noeud au moins une valeur maximale d'un paramètre additif contenu dans un message d'établissement de connexion reçu (ci-après appelé « message »). Cette valeur maximale est inférieure ou égale à la valeur définissant la borne supérieure de l'intervalle de valeurs dans lequel doit se trouver un paramètre de connexion.

Chaque message comporte au moins une (première) valeur V1 représentative d'un paramètre additif comme par exemple le délai de transmission (ou « delay ») ou la gigue (ou « jitter »). Bien entendu, le message peut comporter plusieurs valeurs représentatives de plusieurs paramètres additifs. Par ailleurs, chaque message comporte généralement d'autres valeurs de paramètres de connexion, non additifs, qui doivent être également vérifiés localement et classiquement par le dispositif de contrôle D, ou par tout autre dispositif complémentaire.

On considère dans ce qui suit que chaque message (d'établissement de connexion) reçu par un noeud d'un chemin de connexion comporte au moins une (première) valeur V1 représentative de la gigue, et plus précisément de la somme depuis le début de la connexion à établir de la valeur locale de la gigue introduite par chaque noeud qui le précède au sein dudit chemin de connexion.

On considère par ailleurs dans ce qui suit, à titre d'exemple non limitatif, que le chemin de connexion est défini par la suite ordonnée de noeuds LER1, LCR1, LCR2, LCR3 et LER3. En outre, le dispositif de contrôle D décrit ci-après est celui qui est implanté dans le noeud de coeur LCR3. Mais, les dispositifs D implantés dans les autres noeuds (éléments de réseau) fonctionnent de la même façon.

Le dispositif de contrôle D comprend un module de contrôle MC chargé, chaque fois que son noeud LCR3 reçoit un message contenant une première valeur V1, de déterminer une seconde valeur V2 fonction de cette première valeur et de la valeur locale introduite par l'interface de sortie de son noeud LCR3, dédiée à la connexion à établir, puis de comparer cette seconde valeur à un seuil choisi de manière à déterminer si cette connexion supporte (ne dépasse pas) au niveau dudit noeud LCR3 une valeur maximale de gigue, et de substituer dans le message reçu la première valeur par la seconde valeur déterminée, au moins lorsque la connexion ne supporte pas (c'est-à-dire dépasse) cette valeur maximale au niveau du noeud LCR3.

De préférence, le module de contrôle MC est également chargé de générer un message d'erreur lorsque la connexion à établir ne peut pas supporter la valeur maximale de gigue au niveau du noeud. Dans le cas d'un message à établir dans le contexte L2 LSP, le message d'erreur est par exemple de type « PathError ». Un tel message est notamment défini dans le document de P. Papadimitriou et al, « Generalized MPLS (GMPLS) RSVP-TE Signalling in support of Layer-2 Label Switched Paths (L2 LSP) », accessible sur Internet à l'adresse http://www.ietf.org/internet-drafts/draft-papadimitriou-ccamp-gmpis-i2sc-isp-02.txt. Au moins deux exemples de mise en oeuvre de l'invention peuvent être envisagés.

Un premier exemple de mise en oeuvre consiste à intégrer dans le message une troisième valeur V3 égale au seuil choisi et une première valeur V1 égale à la somme depuis le début de la connexion à établir (ici LER1) de la valeur locale de la gigue introduite par chaque noeud du chemin de connexion précédant le noeud LCR3, à savoir LER1, LCR1 et LCR2.

Dans ce premier exemple la troisième valeur V3 est donc la valeur maximale de gigue que doit présenter la connexion à établir sur l'ensemble de son chemin de connexion, c'est-à-dire de bout-en-bout (ou « end-to-end »).

Par ailleurs, dans ce premier exemple la première valeur V1(i), contenue dans un message reçu par un noeud placé en position i d'un chemin de connexion, est définie par la relation suivante :

$$V1(i) = \sum_{1}^{i-1} P_{loc}(j),$$

où $P_{loc}(j)$ représente la valeur locale de la gigue introduite par un noeud placé en position j (j = 1 à i-1) au sein dudit chemin de connexion.

Par exemple, dans le cas du noeud LCR3, l'indice i est égal à 4 et V1(4) = $P_{loc}(1)$ + $P_{loc}(2)$ + $P_{loc}(3)$, où $P_{loc}(1)$ est la valeur locale de la gigue introduite par le noeud périphérique LER1, $P_{loc}(2)$ est la valeur locale de la gigue introduite par le noeud de coeur LCR1, et $P_{loc}(3)$ est la valeur locale de la gigue introduite par le noeud de coeur LCR2. On notera qu'avec cette notation le noeud placé en position i-1 transmet une première valeur V1(i) au noeud suivant placé en position i.

La seconde valeur V2(i), déterminée par le module de calcul MC au niveau d'un noeud placé en position i dans le chemin de connexion, est ici égale à la somme de la première valeur V1(i) reçue et de la valeur locale $P_{loc}(j=i)$ introduite par l'interface de sortie dudit noeud placé en position i. Par exemple, dans le cas du noeud LCR3, l'indice i est égal à 4 et V2(4) = V1(4) + $P_{loc}(4)$.

Le module de contrôle MC du noeud placé en position i est chargé de comparer chaque seconde valeur V2(i), qu'il a déterminée, à la troisième valeur V3, reçue dans le message et égale au seuil. Pour ce faire, il peut par exemple soustraire la seconde valeur V2(i), qu'il a déterminée, de la troisième valeur V3.

Si le résultat de cette soustraction est inférieur à zéro (V3 - V2(i) < 0), cela indique que la connexion à établir ne pourra plus supporter la valeur maximale de gigue, définie par le seuil V3, dès la sortie du noeud placé en position i dans le chemin de connexion. Le module de contrôle MC génère donc à destination du noeud source de la connexion (ici LER1) un message d'erreur, par exemple de type PathError, signalant que la connexion à établir ne peut pas supporter la valeur maximale de gigue.

Dans le cas contraire, c'est-à-dire si le résultat de la soustraction est supérieur ou égal à zéro (V3 - V2(i) > 0), cela indique que la connexion à établir peut encore supporter la valeur maximale de gigue, définie par le seuil V3, en sortie du noeud placé en position i dans le chemin de connexion. Le module de contrôle MC substitue alors dans le message reçu la première valeur V1(i), qu'il contenait, par la seconde valeur V2(i) qu'il a déterminée et qui devient la nouvelle première valeur V1(i+1) pour le noeud placé en position i+1 dans le chemin de connexion.

Un second exemple de mise en oeuvre consiste à prendre un seuil égal à zéro et à intégrer, dans le message transmis par un noeud placé en position i dans un chemin de connexion, une première valeur V1(i) égale au résultat de la soustraction entre une troisième valeur V3', égale à la valeur maximale de la gigue sur toute la connexion, et la somme depuis le début de la connexion à établir de la valeur locale de la gigue $P_{loc}(i)$ introduite par l'interface de sortie de chaque noeud précédant ledit noeud en position i dans ledit chemin de connexion. Cette première valeur V1(i) reçue est donc définie par la relation suivante :

$$V1(i) = V3' - \sum_{1}^{i-1} P_{loc}(j).$$

On notera qu'avec cette notation le noeud placé en position i-1 transmet une première valeur V1(i) au noeud suivant placé en position i. La première valeur V1(i), qui est transmise dans le message d'établissement de connexion par le noeud placé en position i-1 représente donc la valeur totale du paramètre additif (ici la gigue) restant à la disposition de la connexion à établir entre le noeud placé en position i et le noeud de destination.

Par exemple, dans le cas du noeud LCR3, l'indice i est égal à 4 et V1(3) = V3' - ($P_{loc}(1)$ + $P_{loc}(2)$ + $P_{loc}(3)$), où $P_{loc}(1)$ est la valeur locale de la gigue introduite par le noeud périphérique LER1, $P_{loc}(2)$ est la valeur locale de la gigue introduite par le noeud de coeur LCR1, et $P_{loc}(3)$ est la valeur locale de la gigue introduite par le noeud de coeur LCR2.

La seconde valeur V2(i), déterminée par le module de calcul MC au niveau d'un noeud placé en position i dans le chemin de connexion, est ici égale à la soustraction entre la première valeur V1(i) reçue et la valeur locale $P_{loc}(j=i)$ introduite par l'interface de sortie dudit noeud placé en position i. Par exemple, dans le cas du noeud LCR3, i est égal à 4 et V2(4) = V1(4) - $P_{loc}(4)$.

Dans cet exemple, le module de contrôle MC du noeud placé en position i est chargé de comparer la seconde valeur V2(i), qu'il a déterminée et qui est égale au résultat de la soustraction précitée ($V2(i) = V1(i) - P_{loc}(i)$), à la valeur zéro (0) qui sert de seuil de comparaison.

Si le résultat de cette comparaison est inférieur à zéro ($V2(i) < 0$), cela indique que la connexion à établir ne pourra plus supporter la valeur maximale de gigue, définie par la troisième valeur V3', en sortie du noeud placé en position i dans le chemin de connexion. Le module de contrôle MC génère donc à destination du noeud source de la connexion (ici LER1) un message d'erreur, par exemple de type PathError, signalant que la connexion à établir ne peut pas supporter la valeur maximale de gigue.

Dans le cas contraire, c'est-à-dire si le résultat de la comparaison est supérieur ou égal à zéro ($V2(i) \geq 0$), cela indique que la connexion à établir peut encore supporter la valeur maximale de gigue, définie par le seuil V3', en sortie du noeud placé en position i dans le chemin de connexion. Le module de contrôle MC substitue alors dans le message reçu la première valeur V1(i), qu'il contenait, par la seconde valeur V2(i) qu'il a déterminée et qui devient la nouvelle première valeur V1(i+1) pour le noeud placé en position i+1 dans le chemin de connexion.

Il est important de noter qu'en présence de messages d'établissement de connexion comportant plusieurs (k) premières valeurs (au moins deux) $V1_k(i)$ représentatives respectivement de la somme depuis le début de la connexion à établir de la valeur locale de paramètres additifs $P_{loc\,k}(j)$ différents, introduite par chaque noeud précédent (j = 1 à i-1), le module de contrôle MC, du noeud placé en position i, détermine une seconde valeur $V2_k(i)$ pour chaque première valeur $V1_k(i)$ en fonction de cette première valeur $V1_k(i)$ et de la valeur locale correspondante $P_{loc\,k}(j=i)$, introduite par ledit noeud placé en position i. Puis, comme indiqué précédemment, le module de contrôle MC compare chaque seconde valeur $V2_k(i)$ au seuil correspondant choisi (V3 ou 0), afin de déterminer si la connexion supporte au niveau de son noeud des valeurs maximales des paramètres additifs. Ensuite, soit le module de contrôle MC substitue dans le message reçu chaque première valeur reçue $V1_k(i)$ par chaque seconde valeur déterminée $V2_k(i)$, au moins lorsque la connexion supporte chaque valeur maximale, soit il génère à destination du noeud source de la connexion (ici LER1) un message d'erreur, par exemple de type PathError, lorsque la connexion à établir ne peut pas supporter l'une au moins des valeurs maximales des paramètres additifs qu'il a analysés.

L'intégration de chaque valeur (V1(i) (ou $V1_k(i)$) et éventuellement V3 (ou $V3_k$)) dans un message d'établissement de connexion peut se faire d'au moins trois façons différentes.

Une première façon consiste à intégrer dans le message, transmis de noeud à noeud, la première valeur V1(i) et éventuellement la troisième valeur V3 sous la forme de valeurs d'attributs dédiés différents de chemin de commutation d'étiquettes (LSP).

Une deuxième façon consiste à intégrer dans le message, transmis de noeud à noeud, la première valeur V1(i) et éventuellement la troisième valeur V3(i) sous la forme de valeurs d'un attribut, de préférence SENDER_TSPEC, conformes à un format dédié de type TLV (« Tag, Length, Value » - Identificateur, Longueur, Valeur). Dans ce cas, la première valeur V1(i) qui est mise à jour par le module de contrôle MC, par substitution par la seconde valeur V2(i) déterminée, est accompagnée d'un indicateur (ou « flag ») d'exception autorisant sa substitution locale. Il est en effet rappelé que l'attribut SENDER_TSPEC est en lecture seul et qu'il est donc nécessaire de lui adjoindre un flag d'exception pour qu'il puisse être non seulement lu par le module de contrôle MC, mais également mis à jour (par substitution) par ce dernier.

Une troisième façon consiste à intégrer dans le message, transmis de noeud à noeud, la première valeur V1 (i) et éventuellement la troisième valeur V3 sous la forme de valeurs d'objets dédiés d'un champ de qualité de service (ou QoS) du message d'établissement.

Le dispositif de contrôle D selon l'invention, et notamment son module de contrôle MC, peut être réalisé sous la forme de circuits électroniques, de modules logiciels (ou informatiques), ou d'une combinaison de circuits et de logiciels.

L'invention ne se limite pas aux modes de réalisation de dispositif de contrôle et de noeud décrits ci-avant, seulement à titre d'exemple, mais elle englobe toutes les variantes que pourra envisager l'homme de l'art dans le cadre des revendications ci-après.

## Revendications

**1.** Dispositif de contrôle (D), pour un noeud (LCRm, LERn) d'un réseau de communication par lequel doit passer une connexion à établir, ledit dispositif de contrôle comprenant des moyens de contrôle (MC) agencés, en cas de réception par ledit noeud (LCRm, LERn) d'un message d'établissement d'une connexion, contenant au moins une première valeur représentative de la somme depuis le début de ladite connexion à établir de la valeur locale d'un paramètre additif, introduite en chaque noeud précédent de ladite connexion, pour déterminer une seconde valeur fonction de ladite première valeur et de la valeur locale introduite par ledit noeud (LCRm, LERn), pour déterminer si ladite connexion à établir supporte jusqu'au niveau dudit noeud une valeur maximale dudit paramètre additif, et pour substituer dans ledit message reçu ladite première valeur par ladite seconde valeur déterminée, au moins lorsque ladite connexion supporte ladite valeur maximale jusqu'au niveau dudit noeud, **caractérisé en ce que** les moyens de contrôle sont aptes à déterminer si la connexion à établir supporte ladite valeur maximale jusqu'au niveau dudit noeud par comparaison de ladite seconde valeur à un seuil choisi uniforme pour ladite connexion, ledit réseau de communication étant un réseau Ethernet à plan de contrôle GMPLS.

2. Dispositif selon la revendication 1, **caractérisé en ce que** lesdits moyens de contrôle (MC) sont agencés, lorsque ladite connexion ne supporte pas ladite valeur maximale, pour générer un message d'erreur signalant que ladite connexion à établir ne peut pas présenter ladite valeur maximale du paramètre additif.

3. Dispositif selon l'une des revendications 1 et 2, **caractérisé en ce que** ledit message d'établissement comprend une troisième valeur égale audit seuil choisi, et ladite première valeur est égale à la somme depuis le début de ladite connexion à établir de la valeur locale dudit paramètre additif, introduite en chaque noeud précédent de ladite connexion.

4. Dispositif selon la revendication 3, **caractérisé en ce que** lesdits moyens de contrôle (MC) sont agencés pour soustraire ladite seconde valeur de ladite troisième valeur et pour procéder à ladite substitution lorsque le résultat de ladite soustraction est supérieur ou égal à zéro.

5. Dispositif selon la combinaison des revendications 2 et 3, **caractérisé en ce que** lesdits moyens de contrôle (MC) sont agencés pour soustraire ladite seconde valeur de ladite troisième valeur et pour procéder à ladite génération de message d'erreur lorsque le résultat de ladite soustraction est inférieur à zéro.

6. Dispositif selon l'une des revendications 1 et 2, **caractérisé en ce que** ledit seuil est égal à zéro, **en ce que** ladite première valeur est égale au résultat d'une soustraction entre une troisième valeur, égale à ladite valeur maximale, et la somme depuis le début de ladite connexion à établir de la valeur locale dudit paramètre additif, introduite en chaque noeud précédent de ladite connexion, et **en ce que** lesdits moyens de contrôle (MC) sont agencés pour déterminer ladite seconde valeur en soustrayant ladite valeur locale, introduite par ledit noeud (LCRm, LERn), de ladite première valeur reçue, et pour procéder à ladite substitution lorsque le résultat de ladite comparaison est supérieur audit seuil.

7. Dispositif selon la combinaison des revendications 2 et 6, **caractérisé en ce que** lesdits moyens de contrôle (MC) sont agencés pour procéder à ladite génération de message d'erreur lorsque le résultat de ladite soustraction est inférieur audit seuil.

8. Dispositif selon l'une des revendications 1 à 7, **caractérisé en ce que**, ledit réseau étant du type dit « à commutation d'étiquettes » et ladite connexion devant être établie dans un contexte de type L2 LSP, ladite première valeur et ladite troisième valeur sont des valeurs d'attributs dédiés de chemin de commutation d'étiquettes dudit message d'établissement.

9. Dispositif selon l'une des revendications 1 à 7, **caractérisé en ce que**, ledit réseau étant du type dit « à commutation d'étiquettes » et ladite connexion devant être établie dans un contexte de type L2 LSP, ladite première valeur et ladite troisième valeur sont des valeurs, conformes à un format dédié de type TLV, d'un attribut dudit message d'établissement.

10. Dispositif selon la revendication 9, **caractérisé en ce que** ledit attribut est appelé « SENDER__ TSPEC », ladite première valeur étant accompagnée d'un indicateur d'exception autorisant sa substitution locale.

11. Dispositif selon l'une des revendications 1 à 7, **caractérisé en ce que**, ledit réseau étant du type dit « à commutation d'étiquettes » et ladite connexion devant être établie dans un contexte de type L2 LSP, ladite première valeur et ladite troisième valeur sont des valeurs d'objets dédiés d'un champ de qualité de service dudit message d'établissement.

12. Dispositif selon l'une des revendications 8 à 10 en combinaison avec la revendication 2, **caractérisé en ce que** lesdits moyens de contrôle (MC) sont agencés pour générer des messages d'erreur de type « PathError ».

13. Dispositif selon l'une des revendications 1 à 11, **caractérisé en ce que** certains au moins desdits messages d'établissement comportant au moins deux premières valeurs représentatives de la somme depuis le début de ladite connexion à établir de la valeur locale de deux paramètres additifs, introduite en chaque noeud précédent, lesdits moyens de contrôle (MC) sont agencés pour déterminer une seconde valeur pour chaque première valeur en fonction de cette première valeur et de la valeur locale correspondante introduite par ledit noeud (LCRm, LERn), puis pour comparer chaque seconde valeur à un seuil correspondant choisi, de manière à déterminer si ladite connexion supporte au niveau dudit noeud (LCRm, LERn) des valeurs maximales desdits paramètres additifs, et pour substituer dans ledit message reçu chaque première valeur par chaque seconde valeur déterminée, au moins lorsque ladite connexion supporte chaque valeur maximale.

14. Dispositif selon l'une des revendications 1 à 12, **caractérisé en ce que** chaque paramètre additif est choisi dans un groupe comprenant au moins le délai de transmission et la gigue.

## Claims

1. A control device (D) for a node (LCRm, LERn) of a communication network, through which a connection to be established must pass, said control device comprising control means (CM) designed so that, when said node (LCRm, LERn) receives a connection establishment message, containing at least one first value representative of the sum, starting from the beginning of said connection to be established, of the local value of an additive parameter, contributed in each previous node of said connection, in order to determine a second value which is a function of said first value and of the local value contributed by said node (LCRm, LERn) in order to determine whether said connection to be established can support a maximum value of said additive parameter all the way to said node, and, within said received message, to substitute said first value with said determined second value, at least when said connection can support said maximum value all the way to said node, **characterized in that** the control means are capable of determining whether the connection to established can support said maximum value all the way to said node by comparing said second value to a uniform selected threshold for said connection, said communication network being an Ethernet network with a GMPLS control plane.

2. A device according to claim 1, **characterized in that** said control means (CM) are designed, whenever said connection cannot support said maximum value, to generate an error message indicating that said connection to be established cannot possess said maximum value of the additive parameter.

3. A device according to one of the claims 1 and 2, **characterized in that** said establishment message comprises a third value equal to said selected threshold, and said first value is equal to the sum, starting from the beginning of said connection to be established, of the local value of said additive parameter, contributed in each previous node of said connection.

4. A device according to claim 3, **characterized in that** said control means (CM) are designed to subtract said second value from said third value, and to make said substitution when the result of said subtraction is greater than or equal to zero.

5. A device according to the combination of claims 2 and 3, **characterized in that** said control means (CM) are designed to subtract said second value from said third value, and to perform said error message generation when the result of said subtraction is less than zero.

6. A device according to one of the claims 1 and 2, **characterized in that** said threshold is equal to zero, **in that** said first value is equal to the result of a subtraction between a third value, equal to said maximum value, and the sum, starting from the beginning of the connection to be established, of the local value of said additive parameter, contributed in each previous node of said connection, and **in that** said control means (CM) are designed to determine said second value by subtracting said local value, contributed by said node (LCRm, LERn), from said received first value, and to make said substitution when the result of said comparison is greater than said threshold.

7. A device according to the combination of claims 2 and 6, **characterized in that** said control means (CM) are designed to perform said error message generation when the result of said subtraction is less than said threshold.

8. A device according to one of the claims 1 to 7, **characterized in that**, said network being a label-switched network, and said connection requiring establishment within an L2 LSP context, said first value and said third value are dedicated attribute values of the label-switched path of said establishment message.

9. A device according to one of the claims 1 to 7, **characterized in that**, said network being a label-switched network, and said connection requiring establishment within an L2 LSP context, said first value and said third value are values, compliant with a dedicated TLV format, of an attribute of said establishment message.

10. A device according to claim 9, **characterized in that** said attribute is called "SENDER_TSPEC", said first value being accompanies by an exception indicator allowing it to be locally substituted.

11. A device according to one of the claims 1 to 7, **characterized in that**, said network being a label-switched network, and said connection requiring establishment within an L2 LSP context, said first value and said third value are dedicated object values of a quality-of-service field of said establishment message.

12. A device according to one of the claims 8 to 10, in combination with claim 2, **characterized in that** said control means (CM) are designed to generate "PathError" error messages.

13. A device according to one of the claims 1 to 11, **characterized in that** at least some of said establishment message comprising at least two first values representative of the sum, starting from the beginning of said connection to be established, of the local value of two additive parameters, contributed in each previous node, said control means (CM) being designed to determine a second value for each first value based on that first value and the corresponding local value contributed by said node (LCRm, LERn), then to compare each second value to a selected corresponding threshold, so as to determine whether said connection can support, in said node (LCRm, LERn), maximum values of said additive parameters, and, within said received message, to substitute each first value with each determined second value, at least whenever said connection can support each maximum value.

14. A device according to one of the claims 1 to 12, **characterized in that** each additive parameter is chosen from among a group comprising at least delay and jitter.

**Patentansprüche**

1. Steuervorrichtung D für einen Knoten (LCRm, LERn) eines Kommunikationsnetzwerks, über welchen eine aufzubauende Verbindung laufen muss, wobei die besagte Vorrichtung Steuermittel (MC) umfasst, welche ausgestaltet sind, um im Fall des Empfangs, durch den besagten Knoten (LCRm, LERn), einer Verbindungsaufbaunachricht, welche mindestens einen ersten Wert enthält, der für die Summe, ab Anfang der besagten aufzubauenden Verbindung, des lokalen Wertes eines Zusatzparameters, welcher an jedem der besagten Verbindung vorausgehenden Knoten eingespeist wird, repräsentativ ist, um einen zweiten Wert entsprechend dem besagten ersten Wert und dem in den besagten ersten Knoten (LCRm, LERn) eingespeisten lokalen Wertes zu bestimmen, um zu ermitteln, ob die besagte aufzubauende Verbindung bis zur Ebene des besagten Knotens einen maximalen Wert des besagten Zusatzparameters unterstützt, und um in der besagten empfangenen Nachricht den besagten ersten Wert durch den besagten ermittelten zweiten Wert zu ersetzen, zumindest wenn die besagte Verbindung den besagten maximalen Wert bis zur Ebene des besagten Knotens unterstützt, **dadurch gekennzeichnet, dass** die Steuermittel fähig sind, zu ermitteln, ob die aufzubauende Verbindung den besagten maximalen Wert bis zur Ebene des besagten Knotens unterstützt, durch Vergleichen des besagten zweiten Wertes mit einem gewählten einheitlichen Grenzwert für die besagte Verbindung, wobei das besagte Kommunikationsnetzwerk ein Ethernet-Netzwerk mit GMPLS-Steuerebene ist.

2. Vorrichtung nach Anspruch 1, **dadurch gekennzeichnet, dass** die besagten Steuermittel (MC) ausgestaltet sind, um, wenn die besagte Verbindung den besagten maximalen Wert nicht unterstützt, eine Fehlernachricht zu erzeugen, welche signalisiert, dass die aufzubauende Verbindung den besagten maximalen Wert des Zusatzparameters nicht bieten kann.

3. Vorrichtung nach einem der Ansprüche 1 und 2, **dadurch gekennzeichnet, dass** die besagte Aufbaunachricht einen dritten Wert, welcher dem besagten gewählten Grenzwert entspricht, enthält, und dass der besagte erste Wert der Summe ab Anfang der besagten aufzubauenden Verbindung des lokalen Wertes des besagten Zusatzparameters, welcher in jeden der besagten Verbindung vorausgehenden Knoten eingespeist wurde, entspricht.

4. Vorrichtung nach Anspruch 3, **dadurch gekennzeichnet, dass** die besagten Steuermittel (MC) ausgestaltet sind, um den besagten zweiten Wert von dem besagten dritten Wert zu subtrahieren, und um das besagte Ersetzen vorzunehmen, wenn das Ergebnis der besagten Subtraktion höher als oder gleich Null ist.

5. Vorrichtung nach der Kombination der Ansprüche 2 und 3, **dadurch gekennzeichnet, dass** die besagten Steuermittel (MC) ausgestaltet sind, um den besagten zweiten Wert von dem besagten dritten Wert zu subtrahieren, und um das besagte Erzeugen der Fehlernachricht vorzunehmen, wenn das Ergebnis der besagten Subtraktion niedriger als Null ist.

6. Vorrichtung nach einem der Ansprüche 1 und 2, **dadurch gekennzeichnet, dass** der besagte Grenzwert gleich Null ist, und dass der besagte erste Wert gleich dem Ergebnis einer Subtraktion zwischen einem dritten Wert, welcher gleich dem besagten maximalen Wert ist, und der Summe ab Anfang der besagten aufzubauenden Verbindung des lokalen Wertes des besagten Zusatzparameters, welcher in jedem der besagten Verbindung vorausgehenden Knoten eingespeist wurde, ist, und dass die besagten Steuermittel (MC) ausgestaltet sind, um den besagten zweiten Wert durch Subtraktion des besagten lokalen Wertes, welcher in den besagten Knoten (LCRm, LERn) eingespeist wurde, von dem besagten empfangenen ersten Wert zu ermitteln, und um das besagte Ersetzen vorzunehmen, wenn das Ergebnis des besagten Vergleichens über dem besagten Grenzwert liegt.

7. Vorrichtung nach der Kombination der Ansprüche 2 und 6, **dadurch gekennzeichnet, dass** die besagten Steuermittel (MC) ausgestaltet sind, um das besagte Erzeugen der Fehlernachricht vorzunehmen, wenn das Ergebnis der besagten Subtraktion unter dem besagten Grenzwert liegt.

**8.** Vorrichtung nach einem der Ansprüche 1 bis 7, **dadurch gekennzeichnet, dass**, da das besagte Netzwerk vom sogenannten "Label Switching"-Typ ist und die besagte Verbindung in einem Kontext vom Typ L2 LSP aufgebaut werden soll, der besagte erste Wert und der besagte dritte Wert dedizierte Attributwerte des Label Switching-Pfads der besagten Aufbaunachricht sind.

**9.** Vorrichtung nach einem der Ansprüche 1 bis 7, **dadurch gekennzeichnet, dass**, da das besagte Netzwerk vom sogenannten "Label Switching"-Typ ist und die besagte Verbindung in einem Kontext vom Typ L2 LSP aufgebaut werden soll, der besagte erste Wert und der besagte dritte Wert einem dedizierten Format vom Typ TLV entsprechende Werte eines Attributs der besagten Aufbaunachricht sind.

**10.** Vorrichtung nach Anspruch 9, **dadurch gekennzeichnet, dass** das besagte Attribut "SENDER_TSPEC" genannt wird, wobei der besagte erste Wert von einem Ausnahme-Indikator begleitet ist, welcher dessen lokales Ersetzen zulässt.

**11.** Verfahren nach einem der Ansprüche 1 bis 7, **dadurch gekennzeichnet, dass**, da das besagte Netzwerk vom sogenannten "Label Switching"-Typ ist und die besagte Verbindung in einem Kontext vom Typ L2 LSP aufgebaut werden soll, der besagte erste Wert und der besagte dritte Wert dedizierte Objektwerte eines Dienstgüte-Feldes der besagten Aufbaunachricht sind.

**12.** Verfahren nach einem der Ansprüche 8 bis 10, kombiniert mit Anspruch 2, **dadurch gekennzeichnet, dass** die besagten Steuermittel (MC) ausgestaltet sind, um Fehlernachrichten vom Typ "PathError" zu erzeugen.

**13.** Verfahren nach einem der Ansprüche 1 bis 11, **dadurch gekennzeichnet, dass** zumindest einige der besagten Aufbaunachrichten mindestens zwei erste Werte enthalten, welche für die Summe ab Anfang der besagten aufzubauenden Verbindung des lokalen Wertes von zwei Zusatzparametern, welcher in jeden vorausgehenden Knoten eingespeist wurde, repräsentativ sind, wobei die besagten Steuermittel (MC) ausgestaltet sind, um für jeden ersten Wert einen zweiten Wert entsprechend dieses ersten Wertes und des entsprechenden von dem besagten Knoten (LCRm, LERn) eingespeisten lokalen Wertes zu ermitteln, und um anschließend jeden zweiten Wert mit einem ausgewählten entsprechenden Grenzwert zu vergleichen, um zu ermitteln, ob die besagte Verbindung die maximalen Werte der besagten Zusatzparameter auf der Ebene des besagten Knotens (LCRm, LERn) unterstützt, und um in der besagten empfangenen Nachricht jeden ersten Wert durch jeden ermittelten zweiten Wert zu ersetzen, zumindest wenn die besagte Verbindung jeden maximalen Wert unterstützt.

**14.** Verfahren nach einem der Ansprüche 1 bis 12, **dadurch gekennzeichnet, dass** jeder Zusatzparameter in einer Gruppe ausgewählt wird, welche mindestens die Übertragungsdauer und den Jitter umfasst.

NMS

MC

LER5

LCR4

MC

D

D

D

MC

LER4

N

LER3

MC

T1

D

LCR1

D

LCR2

D

LER1

MC

MC

D

LCR3

T4

D

MC

MC

T2

LER2

MC

D

T3

Figure unique

**RÉFÉRENCES CITÉES DANS LA DESCRIPTION**

**Documents brevets cités dans la description**

- EP 1037500 A